# EUROPEAN PATENT APPLICATION

(11) **EP 3 016 040 A1**
(43) Date of publication of application: **04.05.2016**
(21) Application number: 15000644.3
(22) Date of filing: 05.03.2015
(51) Int. Cl.: G06Q 10/02, G06Q 50/14

(54) **Dynamic database object management**

(30) Priority: 03.11.2014 US 201414531333
(71) Applicant: Amadeus S.A.S., 06410 Biot (FR)
(72) Inventor: Gagniard, Gilles, 06330 Roquefort Les Pins (FR); Chivot, Laure, 06000 Antibes (FR); Lebeau, Melanie, 06160 Juan les Pins (FR); Cazeaux, Olivier, Bogota (CO)
(74) Representative: Samson & Partner Patentanwälte mbB

(57) **Abstract**

Systems, methods, and computer program products for dynamically managing a travel object database that maintains one or more travel objects. A time limit request is received at a processing system for a record associated with one or more travel objects of the travel object database. A base time limit for a geographical identifier associated with the record is determined based at least in part on the geographical identifier by querying a time limit rules database based at least in part on the geographical identifier. The base time limit is adjusted based at least in part on the geographical identifier and at least one time adjustment rule to determine a geographical identifier time limit. A time limit for the record is determined based at least in part on the geographical identifier time limit to thereby transform the record and information thereof into a time limit for the travel objects associated with the record and maintained by the travel object database.

## Description

### TECHNICAL FIELD

The invention is generally related to computers and computer software and, in particular, to systems, methods, and computer program products for dynamically managing database objects.

### BACKGROUND

Computer technology is increasingly used in the travel industry to manage and support travel reservations, as well as data associated therewith. In particular, reservation agents (i.e., travel agencies) increasingly book travel by remotely interfacing with a reservation system that in turn interfaces with inventory systems of one or more travel merchants (e.g., airlines, rail travel providers, bus travel providers, etc.) to book one or more travel inventory items from the one or more travel merchants. In general, a travel inventory item refers to a unit or item from a saleable inventory of a travel merchant. For example, a travel inventory item of an airline may refer to a place on a segment, i.e. a place on a flight between an origin and destination, but generally does not refer to a specific physical seat. In general, a flight-date may be considered to be a particular flight that occurs on a particular travel date. Moreover, each inventory system for each travel merchant generally manages travel inventory items for the particular travel merchant. For example, for an airline, the inventory system may maintain the availability and booking of places on each flight-date provided by the airline.

In conventional systems, a reservation agent creates and/or modifies a Passenger Name Record (PNR) with a travel reservation device (e.g., a terminal used by a travel agent) to initialize a reservation session with the reservation system and thereby book travel for a customer associated with the PNR. The reservation system retrieves the PNR from a database and initializes an inventory session with each inventory system of a travel merchant for which a travel inventory item is to be booked.

During the booking of a travel inventory item, the inventory system of a travel merchant is updated to reflect the booking of the travel inventory item so that double booking of travel inventory items for the travel merchant is not possible. In some conventional systems, a reservation agent may finalize the booking, such that the travel inventory item is committed for the reservation agent in the inventory system. While the travel inventory item is committed in the inventory system, payment may not be collected until ticketing. Therefore, in some situations, a booking for a travel inventory item may be committed in the inventory system, but ticketing has not yet occurred, such that payment for the committed travel inventory item has not been collected. For a travel merchant, a committed booking that is not ticketed may present inventory and revenue issues, including inaccurate inventories as well as lost sale opportunities if a committed booking is canceled close to a departure time for a travel inventory item of the booking.

Consequently, a need exists in the art for improved systems, methods, and computer program products for dynamically managing database objects, such as travel objects at an inventory system.

### SUMMARY

Embodiments of the invention generally comprise systems, methods, and computer program products for determining a ticket time limit for a travel record. A time limit request for the travel record may be received at an inventory system. A base time limit for an origin and destination pair associated with the travel record may be determined based at least in part on the origin and destination pair by querying a time limit rules database based at least in part on the origin and destination pair. The base time limit may be adjusted based at least in part on the origin and destination pair and at least one time adjustment rule to determine an origin and destination ticket time limit. The ticket time limit for the travel record may be determined based at least in part on the origin and destination ticket time limit such that the origin and destination pair and the at least one travel segment associated with ticket time limit request may be transformed into the ticket time limit based at least in part on the base time limit and the at least one time adjustment rule.

### BRIEF DESCRIPTION OF THE SEVERAL VIEWS OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a block diagram of a reservation system, travel reservation device, and one or more inventory systems consistent with embodiments of the invention.
FIG. 2 is a block diagram of an inventory system of FIG. 1.
FIG. 3 is a flowchart illustrating a sequence of operations that may be performed by the inventory system of FIG. 2 to determine a ticket time limit for a travel record.
FIG. 4 is a flowchart illustrating a sequence of operations that may be performed by the inventory system of FIG. 2 to determine one or more time adjustment rules.
FIG. 5 is a diagrammatic illustration of an example determination of an origin and destination ticket time limit.
FIG. 6 is a flowchart illustrating a sequence of operations that may be performed by the inventory system of FIG. 2 to check and/or adjust an origin and destination ticket time limit based on a minimum and/or maximum boundary.
FIG. 7 is a diagrammatic illustration of an example determination of an origin and destination ticket time limit.
FIGS. 8A and 8B are diagrammatic illustrations of an example determination of an origin and destination ticket time limit.
FIGS. 9A and 9B are diagrammatic illustrations of an example determination of an origin and destination ticket time limit.
FIG. 10 is a diagrammatic illustration of example time adjustment rules and rule sets corresponding thereto.

### DETAILED DESCRIPTION

Embodiments of the invention provide systems, methods, and computer program products for dynamically managing a travel object database, where the travel object database maintains one or more travel objects. A time limit request is received at a processing system for a record associated with one or more travel objects of the travel object database. A base time limit for a geographical identifier associated with the record may be determined based at least in part on the geographical identifier. The base time limit may be adjusted based at least in part on the geographical identifier and at least one time adjustment rule to determine a geographical identifier time limit. A time limit for the record may be determined based at least in part on the geographical identifier time limit to thereby transform the record and information thereof into a time limit for the travel objects associated with the record and maintained by the travel object database. In some embodiments of the invention, a record may be a travel record, a processing system may be an inventory system, a geographical identifier may be an origin and destination pair, and a time limit for a record may be a ticket time limit.

Embodiments of the invention determine a ticket time limit for a travel record for travel inventory management at an inventory system. In general, the travel record may comprise a passenger name record (PNR) and/or additional information. Consistent with embodiments of the invention, the travel record generally comprises one or more travel inventory items associated with one or more travel services, where each travel inventory item corresponds to one travel segment. The travel segments of the travel record generally combine to form a journey having an origin and destination pair. For example, if a travel record included a first travel segment between city A and city B and a second travel segment between city B and city C, the journey corresponding to the travel record would have an origin of city A and a destination of city C, which may be referred to as an origin and destination pair of A-C.

Consistent with embodiments of the invention, an inventory system may determine a ticket time limit for a travel record based at least in part on an origin and destination pair of the travel record. Furthermore, an inventory system consistent with embodiments of the invention may determine a base time limit for an origin and destination pair associated with the travel record based at least in part on the origin and destination pair. The inventory system may further adjust the base time limit based at least in part on one or more characteristics of the travel segments associated with the origin and destination pair, loyalty data, and/or other such relevant information to determine an origin and destination ticket time limit (O&D TTL). The ticket time limit for the travel record may be determined based on origin and destination pair ticket time limits determined for the travel record. For example, if a travel record comprises travel segments associated with a first origin and destination pair and a second origin and destination pair, embodiments of the invention may determine an origin and destination pair ticket time limit for each origin and destination pair. The ticket time limit for the travel record may be determined based on the origin and destination pair ticket time limits of the first origin and destination pair and the second origin and destination pair. In some embodiments, the ticket time limit for the travel record may be the shortest duration origin and destination ticket time limit from the origin and destination pair ticket time limits determined for the travel record.

Therefore, consistent with embodiments of the invention, an origin and destination pair and a travel segment of a ticket time limit request may be transformed into a ticket time limit for a travel record based at least in part on a base time limit and one or more time adjustment rules determined for the ticket time limit request. In general, an inventory system may store a time limit rules database, and the time limit rules database may be queried to determine a base time limit for a ticket time limit request. In particular, a query for the time rules database may be generated in the inventory system based at least in part on an origin and destination pair associated with the travel record. The time limit rules database may store a possible base time limit for one or more possible origin and destination pairs. Therefore, the query may be generated based on an origin and destination pair of the travel record, and a base time limit for the origin and destination pair may be determined by way of the generated query.

The inventory system may further store a time adjustment rules database that stores possible travel record criteria and a time adjustment value for each of the one or more travel record criteria. In such embodiments, if a travel record associated with the ticket time limit request meets a particular travel record criteria, a time adjustment value associated with the particular travel record criteria may be applied to adjust a base time limit. In further embodiments, the possible time adjustment rules of the time adjustment rules database may be grouped into rule sets based on a type associated with the time adjustment rule. In these embodiments, the inventory system may determine a priority for each time adjustment rule determined to be applicable to the travel record, and the inventory system may select a highest priority rule from each rule set with which to adjust the base time limit.

As will be appreciated, the two database structure of embodiments of the invention may facilitate increased granularity of applicable rules for determining travel record ticket time limits. Moreover, determination of a travel record ticket time limit based on a base time limit and one or more adjustment rules may allow a user/operator of such inventory management system to increase configurability of the ticket time limit determination. For example, with time adjustment rules, a travel record ticket time limit may be determined based at least in part on a travel segment of the travel record, passenger/customer loyalty data, real time inventory data, load factor data, and/or other such criteria that may be determined from the travel record. Moreover, grouping time adjustment rules into rule sets and selecting a highest priority time adjustment rule from each rule set may facilitate improved configurability of a ticket time limit determination while improving system response efficiency compared to conventional inventory systems. In particular, data processing systems for inventory management of travel inventory generally maintain large databases and generally require high speed data processing. Embodiments of the invention may provide improvements in the travel inventory management technology field. In particular, determining a base time limit and subsequently applying at least one time adjustment rule limits database size for storing rules for determining time limits. Moreover, queries on the databases may increase the determination of and response time for the ticket time limit.

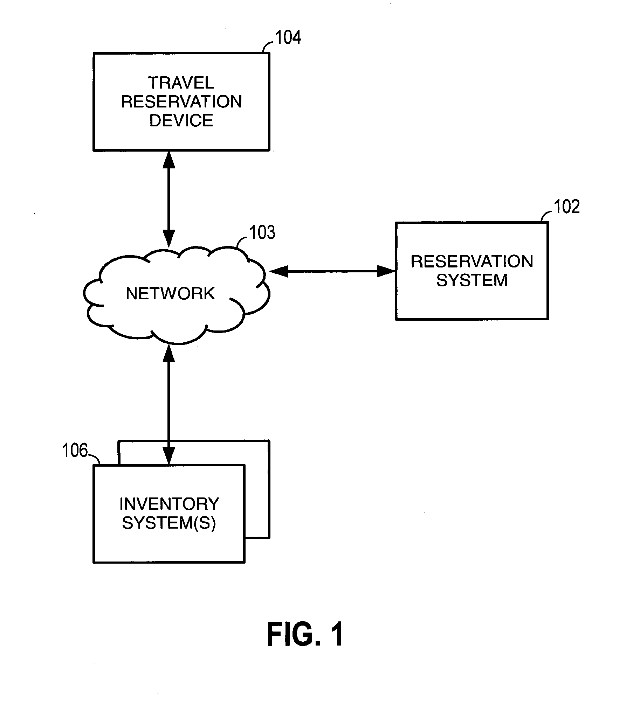

Turning now to the figures and particularly to FIG. 1, this figure provides a block diagram illustrating the one or more devices and/or systems consistent with embodiments of the invention. As shown in FIG. 1, a reservation system 102 may be implemented as one or more servers. The reservation system 102 may be connected to a communication network 103, where the communication network 103 may comprise the Internet, a local area network (LAN), a wide area network (WAN), a cellular voice/data network, one or more high speed bus connections, and/or other such types of communication networks. A travel reservation device 104 may be connected to the communication network 103, such that a reservation agent (e.g., travel agency or other such travel reservation service) may initialize a reservation session with the reservation system 102 to communicate a booking request and/or other such relevant data to the reservation system 102. The travel reservation device 104 may be a personal computing device, tablet computer, thin client terminal, smart phone and/or other such computing device.

One or more servers for one or more inventory systems 106 of one or more travel merchants are connected to the communication network 103. The reservation system 102 may initialize an inventory session over the communication network 103 with each inventory system 106 for which a travel segment is to be booked. Consistent with embodiments of the invention, a reservation agent may interface with the reservation system 102 using the travel reservation device 104 in a reservation session to provide data for a booking request. In turn, the reservation system interfaces with each inventory system 106 of each travel merchant that provides a travel segment needed for the booking request in an inventory session.

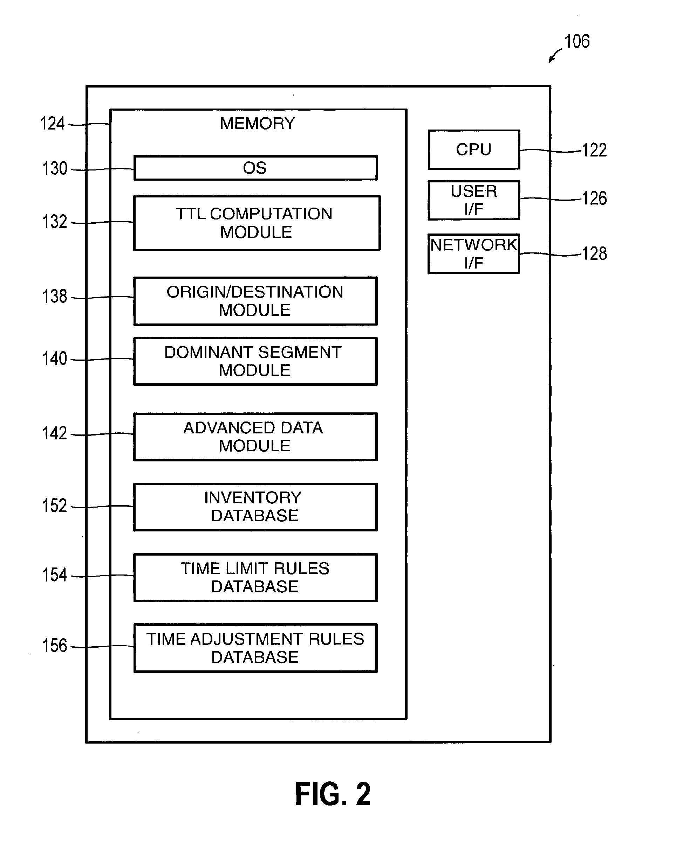

FIG. 2 provides a block diagram that illustrates the components of the one or more servers of an inventory system 106 consistent with embodiments of the invention. The inventory system 106 includes at least one processor 122 including at least one hardware-based microprocessor and a memory 124 coupled to the at least one processor 122. The memory 124 may represent the random access memory (RAM) devices comprising the main storage of inventory system 106, as well as any supplemental levels of memory, e.g., cache memories, non-volatile or backup memories (e.g., programmable or flash memories), read-only memories, etc. In addition, memory 124 may be considered to include memory storage physically located elsewhere in the travel and inventory system 106, e.g., any cache memory in a microprocessor, as well as any storage capacity used as a virtual memory, e.g., as stored on a mass storage device or on another computer coupled to the travel and inventory system 106.

For interface with a user or operator, the inventory system 106 may include a user interface 126 incorporating one or more user input/output devices, e.g., a keyboard, a pointing device, a display, a printer, etc. Otherwise, input may be received via another computer or terminal (e.g., the travel reservation device 104 and/or the reservation system 102) over a network interface 128 coupled to the communication network 103. The inventory system 106 also may be in communication with one or more mass storage devices, which may be, for example, internal hard disk storage devices, external hard disk storage devices, external databases, storage area network devices, etc.

The inventory system 106 typically operates under the control of an operating system 130 and executes or otherwise relies upon various computer software applications, components, programs, objects, modules, data structures, etc., including for example, a ticket time limit (TTL) computation module 132, an origin and destination module 138, a dominant segment module 140, and/or an advanced data module 142. The memory 124 of the inventory system may generally store one or more databases including for example, an inventory database 152, time limit rules database, and/or a time adjustment rules database 156. Each database 152-156may include data and supporting data structures that store and organize the data. In particular, each database 152-156 may be arranged with any database organization and/or structure including, but not limited to, a relational database, a hierarchical database, a network database, and/or combinations thereof. A database management system in the form of a computer software application executing as instructions on a processing unit of the inventory system 106 is used to access the information or data stored in records of the databases 152-156 in response to a query.

The inventory database 152 generally stores inventory data corresponding to travel segments of a travel merchant that the inventory system 106 is configured to manage. The inventory data that may be stored in the inventory database 152, may include available space on travel segments, a load factor for each travel segment (e.g., the number of booked seats on a flight-date for a cabin compared to the total number of seats on the flight-date for the cabin), time to departure for each travel segment, and/or other such information.

The time limit rules database 154 generally stores possible time limit rules that may be used to determine a base time limit for a travel record based at least in part on an origin and destination pair associated with the travel record. In general, the time limit rules database stores one or more time limit rules for each of a plurality of origin and destination pairs. The time adjustment rules database 156 generally stores possible time adjustment rules that may be used to adjust a base time limit determined for a travel record. In general, the possible time adjustment rules database may store different travel record criteria and time adjustment rules associated with the different travel record criteria. Travel record criteria may include, for example, a point of sale, a market origin/destination, a connecting market, a class, min/max days before departure, whether a travel record includes a round trip, an itinerary status, a flight path, a flight departure start/end, a cabin, one or more keywords, a fare basis, a ticket designator, an inbound connecting airline, an outbound connecting airline, a load factor, an expected load factor, an effective yield, loyalty data, booking date range, and/or other such criteria that may be determined from the travel record. For example, the time adjustment rules database 156 may store a time adjustment rule that indicates that a base time limit for a travel record should be increased by 2 days if a passenger associated with the travel record is a particular frequent flyer class (an example of loyalty data criteria).

In general, the modules 132-142 may be executing on the inventory system 106, and the modules 132-142 may cause the processor to perform operations consistent with embodiments of the invention. The TTL computation module 132 may be configured to receive a time limit request for a travel record, determine a ticket time limit for the travel record, and communicate a ticket time limit response based on the determined ticket time limit. Consistent with embodiments of the invention, the origin and destination module 138 may be configured to determine at least one origin and destination pair associated with the travel record based at least in part on one or more travel segments of the travel record. The dominant segment module 140 may be configured to determine a dominant segment for the travel record. Hence, the dominant segment module may analyze the travel record to determine a dominant segment for each origin and destination from among the one or more travel segments of the travel record. The advanced data module 142 may be configured to retrieve data from the inventory database, a revenue management component and/or system, and/or any customer loyalty database and/or system for use by the TTL computation module 132 in determining the ticket time limit.

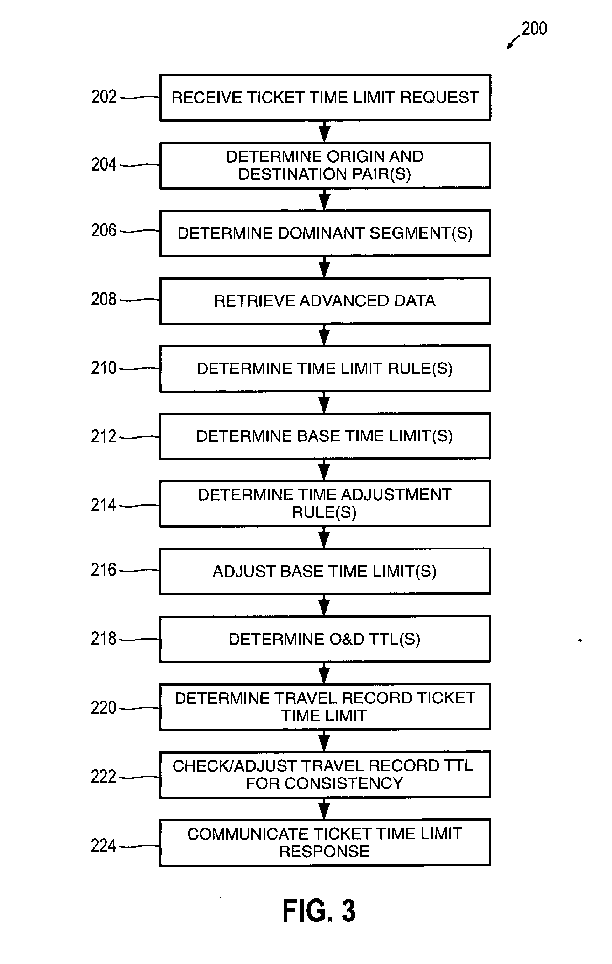

FIG. 3 provides a flowchart 200 that illustrates a sequence of operations that may be performed by the inventory system 106 to determine a ticket time limit for a travel record consistent with embodiments of the invention. As shown in FIG. 3, the inventory system 106 receives a ticket time limit request from a reservation system 102 (block 202). The ticket time limit request may include a travel record for which the time limit determination is requested. The inventory system 106 analyzes the travel record to determine one or more origin and destination pairs included in the travel record. In general, the travel record may include one or more travel segments, and the travel segments may be grouped in one or more origin and destination pairs. For example, a travel record including travel segments corresponding to a journey between city A and city C may have two travel segments - a travel segment for travel from city A to city B and a second travel segment for travel from city B to city C which may be determined to be an origin and destination pair of A-C.

For each determined origin and destination pair, the inventory system determines a dominant segment (block 206). In general, a dominant segment may be determined to be a travel segment having a highest relative revenue importance (e.g., highest revenue, most profitable, etc.), and a dominant segment may be selected for an origin and destination pair such that attributes/characteristics of the dominant segment may be used in determining the ticket time limit for the origin and destination pair. Attributes/characteristics for a dominant segment may include, for example, a class, and/or other such attributes/characteristics that are relevant for travel segments only. For each origin and destination pair, the inventory system 106 may retrieve advanced data (block 208) that may be used in determining the ticket time limit. Advanced data may include, for example, inventory data stored in the inventory database 152, revenue management data that may be retrieved from a revenue management system, customer loyalty data that may be retrieved from a customer loyalty system, and/or other such types of data. Inventory data may include availability information associated with the travel segments, such as a number of travel places available for booking for a particular class and/or travel service, context of travel segments (e.g., direct, online, interlined), load factor information, and/or other such types of information. Revenue management data may include yield and/or expected load factor for the travel segments. Customer loyalty data may include frequent flyer information for a traveler associate with the travel record, and/or other such types of information. Therefore, consistent with some embodiments of the invention, one or more attributes of a dominant segment may be determined based on retrieved advanced data and/or data included in the travel record.

For each origin and destination pair determined for the travel record, the inventory system 106 determines a time limit rule (block 210), where the time limit rule for each origin and destination pair may be used by the inventory system 106 to determine a base time limit for each origin and destination pair (block 212). As will be appreciated, consistent with embodiments of the invention, the inventory system generates a query based at least in part on the one or more origin and destination pairs associated with the travel record, and the time limit rules database is queried using the generated query to determine the time limit rules for the one or more origin and destination pairs. The inventory system further determines one or more time adjustment rules for each origin and destination pair (block 214) based at least in part on the origin and destination pair, inventory data for travel segments associated with the origin and destination pairs, revenue management data, and/or customer loyalty data. As will be appreciated, consistent with embodiments of the invention, the inventory system generates a query based at least in part on the one or more origin and destination pairs, travel record criteria, inventory data, revenue management data, and/or other such types of information. The inventory system queries the time adjustment rules database based at least in part on the generated query to determine the one or more time adjustment rules. The base time limit for each origin and destination pair may be adjusted by the inventory system 106 based at least in part on the determined time adjustment rules (block 216) to thereby determine an origin and destination pair ticket time limit for each origin and destination pair (block 218).

The inventory system 106 may determine a travel record ticket time limit based at least in part on the origin and destination pair ticket time limits determined for each origin and destination pair (block 220). In general, the inventory system 106 may select the most restrictive (i.e., shortest duration) ticket time limit of the origin and destination pair ticket time limits as the travel record ticket time limit. Therefore, embodiments of the invention may transform the at least one travel segment of a travel record into a travel record ticket time limit based at least in part on a determined origin and destination pair, one or more time limit rules, one or more time adjustment rules, and/or travel record criteria.

In some embodiments, the inventory system 106 may check the determined travel record ticket time limit for consistency (block 222). In general, the inventory system 106 may check the travel record ticket time limit to determine whether the travel record ticket time limit: (a) does not fall before the end of transaction date and time; and (b) does not fall after the departure date of the first travel segment of the travel record. If needed, the inventory system 106 may adjust the travel record ticket time limit based on the consistency check such that the travel record ticket time limit falls after the end of transaction date and time and before the departure date of the first travel segment of the travel record. In some embodiments, the inventory system 106 may evaluate the travel record ticket time limit for consistency based on other criteria. The inventory system 106 may communicate a ticket time limit response that indicates the travel record ticket time limit determined for the travel record to the reservation system 102(block 224).

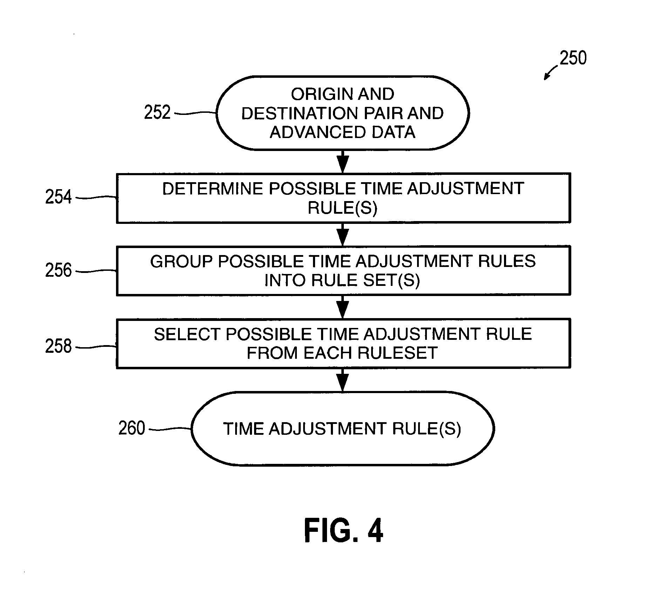

FIG. 4 provides a flowchart 250 that illustrates a sequence of operations that may be performed by the inventory system 106 to determine one or more time adjustment rules for adjusting base time limits of the one or more origin and destination pairs based on data of the travel record and any advanced data retrieved for the travel record (block 252). Consistent with embodiments of the invention, the inventory system 106 determines one or more possible time adjustment rules (block 254). In general, the one or more possible time adjustment rules may be determined based on the origin and destination pair, travel segment context, availability information, customer loyalty information, revenue management information, and/or any other such characteristics that may be determined from the travel record, and/or travel segments.

The time adjustment rules may generally comprise rule criteria and rule content. The rule criteria generally specify one or more characteristics/attributes of the travel record and/or travel segments for which the time adjustment rule is relevant/applicable, which may also be referred to as travel record criteria. For example, an example rule criteria of an example time adjustment rule may specify that the time adjustment rule is applicable/relevant for travel records associated with travelers of a particular customer loyalty tier/level. The rule content generally includes a time adjustment value that may be used to adjust a base time limit. Continuing the previous example, the example time adjustment rule may include a time adjustment value of an additional two days. In this example, a base time limit determined for an origin and destination pair of the travel record associated with the traveler of the particular customer loyalty tier/level indicated in the example rule criteria may be increased by two days.

The inventory system 106 groups the possible time adjustment rules into one or more rule sets (block 256). In general, each rule set has a type, where the type generally describes a category to which the possible time adjustment rules of the rule set correspond. Generally, the types and possible time adjustment rules corresponding to such type may be user defined. For example, a user may define a first type corresponding to events, where the rule set associated with the first type generally includes time adjustment rules having rule criteria intended to address events. For example, a rule criteria for a time adjustment rule that may be grouped into an event type rule set may indicate a range of dates associated with holiday travel (e.g., an event), and the rule content for such time adjustment rule may include a time adjustment value of a reduction of two days. In this example, determining a ticket time limit for a travel record that includes travel segments within the indicated date range may include reducing a base time limit for an origin and destination pair associated with the travel segments by two days. Other types for which rule sets correspond may include, for example, travel segment context (e.g., direct, online, interlined), flight pressure (which may be based on load factor and/or expected load factor), and/or customer loyalty. Therefore, the inventory system 106 may group a particular possible time adjustment rule into a particular rule set based at least in part on a type of the particular rule set and rule criteria of the particular possible time adjustment rule.

The inventory system 106 may select a possible time adjustment rule from each rule set (block 258) to thereby determine the time adjustment rules for the origin and destination pairs of the travel record (block 260). In general, each time adjustment rule may include a priority, where the priority may be used to relatively rank possible time adjustment rules of a rule set. Consistent with some embodiments of the invention, the inventory system 106 may select a possible time adjustment rule from each rule set having the highest priority as a time adjustment rule for adjusting a base time limit.

Therefore, consistent with embodiments of the invention, an inventory system 106 may analyze a travel record to determine each origin and destination pair represented by travel segments of the travel record. The inventory system 106 may determine advanced data for the travel segments. Based on the origin and destination pairs and the advanced data, the inventory system determines a time limit rule for each origin and destination pair, which may be used to determine a base time limit for each origin and destination pair. One or more time adjustment rules may be determined for each origin and destination pair, where the time adjustment rules may be used to adjust the base time limit of each origin and destination pair to thereby determine an origin and destination pair ticket time limit for each origin and destination pair. The origin and destination pair ticket time limits may be checked with minimum and/or maximum time limit requirements. If the origin and destination pair ticket time limits are not consistent with such minimum and maximum time limits, the inventory system 106 may further adjust the origin and destination pair ticket time limits such that the time limit constraints are met.

The origin and destination pair ticket time limit may be compared to determine a travel record ticket time limit. The travel record ticket time limit may be checked for consistency with departure times for travel segments of the travel record, and/or other such relevant constraints. If travel record ticket time limit is not consistent with such departure time based constraints and/or other such relevant constraints, the inventory system 106 may further adjust the travel record ticket time limit such that the constraints are met.

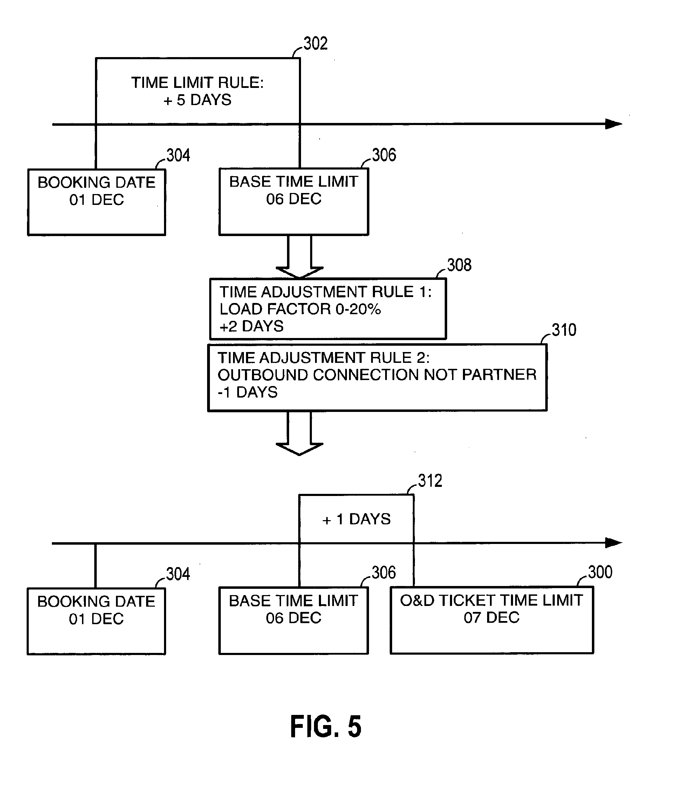

Turning to FIG. 5, this figure provides a diagrammatic illustration of an example determination of an origin and destination pair ticket time limit 300 consistent with some embodiments of the invention. In this example, a time limit rule 302 may indicate that, from a booking date 304 of December 1 ('01 DEC') for a particular origin and destination pair, a base time limit may be five days ('+5 DAYS') from the booking date 304 - i.e., the base time limit 306 is December 6 ('06 DEC'). As shown, the base time limit 306 may be adjusted based on two time adjustment rules 308, 310. In this example, a first time adjustment rule 308 ('TIME ADJUSTMENT RULE 1') indicates that the base time limit 306 should be adjusted by the addition of two days if a origin and destination level load factor for the origin and destination pair is 0% to 20%. A second time adjustment rule 310 indicates that the base time limit 306 should be adjusted by the subtraction of one day if a connecting segment of the travel record is not provided by a partner travel merchant. Therefore, in this example, the base time limit 306 is adjusted by the addition of one day 312 to thereby determine the ticket time limit 300 of December 7 ('07 DEC') for the origin and destination pair, which is the overall result of applying the two time adjustment rules 308.

Consistent with some embodiments of the invention, some time adjustment rules may be configured to limit the determination of a ticket time limit for an origin and destination pair. In particular, a minimum boundary may be determined for an origin and destination pair ticket time limit such that a customer/passenger is given at least a minimum amount of time to ticket after a booking is made, which may be referred to as passenger protection. Similarly, a maximum boundary may be determined for an origin and destination pair ticket time limit such that ticketing for a booking is completed at least prior to flight departure, which may be referred to as inventory protection.

In general, the minimum boundary and/or maximum boundary may be determined based at least in part on the origin and destination pair and/or advanced data (e.g., inventory data, customer loyalty data, revenue data, etc.). In some embodiments, a time adjustment rule may include a minimum time limit, and/or a maximum time limit, and/or a time adjustment value. In general, the minimum time limit and/or maximum time limit may serve to limit the adjustment of a base time limit based on time adjustment values of one or more relevant time adjustment rules. Furthermore, since a plurality of time adjustment rules may be determined for adjusting a base time limit, embodiments of the invention may determine a maximum and/or minimum boundary for adjustment of the origin and destination pair base time limit based at least in part on the minimum and/or maximum time limits provided in some time adjustment rules.

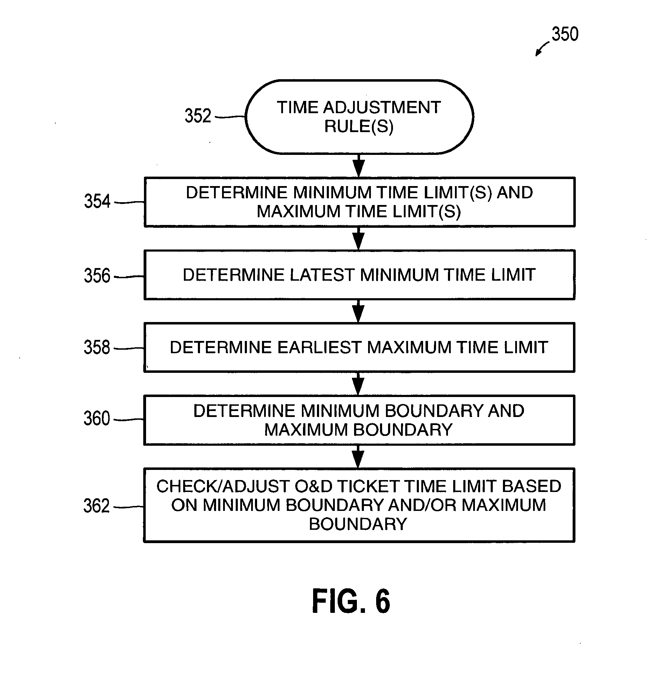

FIG. 6 provides a flowchart 350 that illustrates a sequence of operations that may be performed by the inventory system 106 to adjust an origin and destination pair ticket time limit based on a minimum boundary and a maximum boundary determined from time adjustment rules (block 352). The inventory system 106 analyzes the time adjustment rules for the origin and destination pair to determine any minimum time limits and/or maximum time limits provided by the time adjustment rules (block 354). The inventory system 106 determines the latest minimum time limit (block 356) of the minimum time limits provided by the time adjustment rules - i.e., the inventory system 106 determines which minimum time limit indicates the longest duration minimum time limit. For example, if a first minimum time limit is 2 days from booking and a second minimum time limit is 4 days from booking, the latest minimum time limit is the second minimum time limit. Similarly, the inventory system 106 determines the earliest maximum time limit (block 358) of the maximum time limits provided by the time adjustment rules. For example, if a first maximum time limit is 3 days prior to a departure date and a second maximum time limit is 4 days prior to the departure date, the second maximum time limit is the earliest maximum time limit.

The inventory system 106 determines a minimum boundary for the origin and destination pair ticket time limit based on the highest minimum time limit, and the inventory system 106 determines a maximum boundary for the origin and destination pair ticket time limit based on the lowest maximum time limit (block 360). The inventory system 106 may check the origin and destination pair ticket time limit based on the minimum boundary and the maximum boundary, and, if needed, the origin and destination pair ticket time limit may be adjusted to fall within a range defined by the minimum boundary and the maximum boundary (block 362).

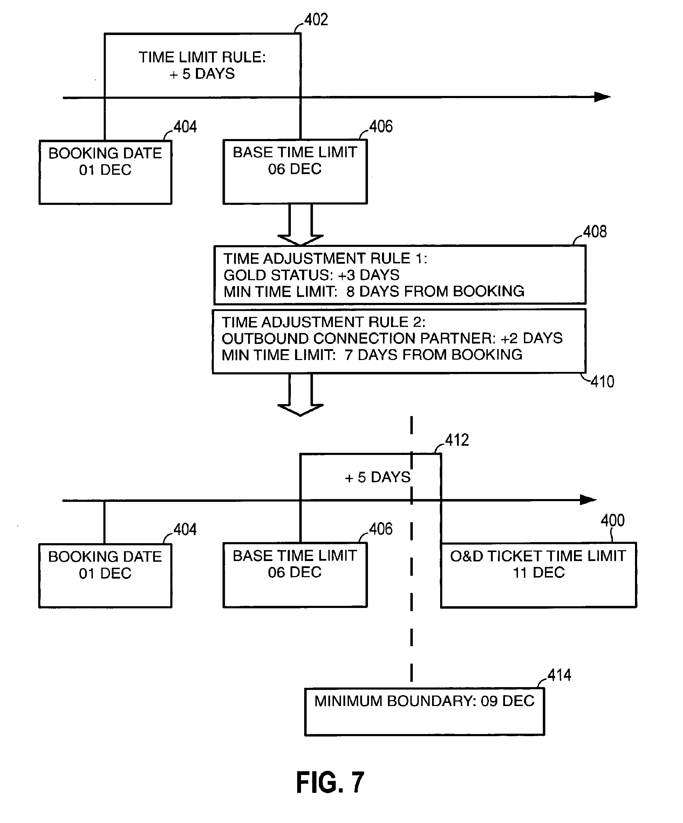

FIG. 7 provides a diagrammatic illustration of an example determination of an origin and destination pair ticket time limit 400 consistent with some embodiments of the invention. In this example, a time limit rule 402 may indicate that, from a booking date 404 of December 1 ('01 DEC') for a particular origin and destination pair, a base time limit may be five days ('+5 DAYS') from the booking date 404 - i.e., the base time limit 406 is December 6 ('06 DEC'). As shown, the base time limit 406 may be adjusted based on two time adjustment rules 408, 410. In this example, a first time adjustment rule 408 ('TIME ADJUSTMENT RULE 1') indicates that the base time limit 406 should be adjusted by the addition of three days if a customer/passenger has a customer loyalty gold status ('GOLD STATUS: +3 DAYS'). A second time adjustment rule 410 indicates that the base time limit 406 should be adjusted by the addition of 2 days if an outbound connection for a travel segment of the origin and destination pair is provided by a partner ('OUTBOUND CONNECTION PARTNER: +2 DAYS'). Therefore, in this example, the base time limit 406 is adjusted by the addition of five days 412 to thereby determine the ticket time limit 400 of December 11 ('11 DEC') for the origin and destination pair, which is the overall result of applying the two time adjustment rules 408, 410.

In addition, in this example, each time adjustment rule 408, 410 includes a minimum time limit - the first time adjustment rule 408 indicates a minimum time limit of 8 days from the booking date 404 ('MIN TIME LIMIT: 8 DAYS FROM BOOKING'), and the second time adjustment rule 410 indicates a minimum time limit of 7 days from the booking date 404 ('MIN TIME LIMIT: 7 DAYS FROM BOOKING'). Therefore, in this example, the inventory system 106 may determine a minimum boundary 414 associated with determining the origin and destination pair ticket time limit 400. In particular, the inventory system 106 determines the highest minimum time limit of the time adjustment rules 408, 410, which in this example is 8 days from the booking date 404 provided in the first time adjustment rule 408. Therefore, the minimum boundary 414 is determined to be December 9 ('09 DEC'), which is the result of adding 8 days to the booking date 404. In this particular example, the origin and destination pair ticket time limit 400 is later than the minimum boundary 414, so adjustment of the origin and destination pair ticket time limit 400 is not needed.

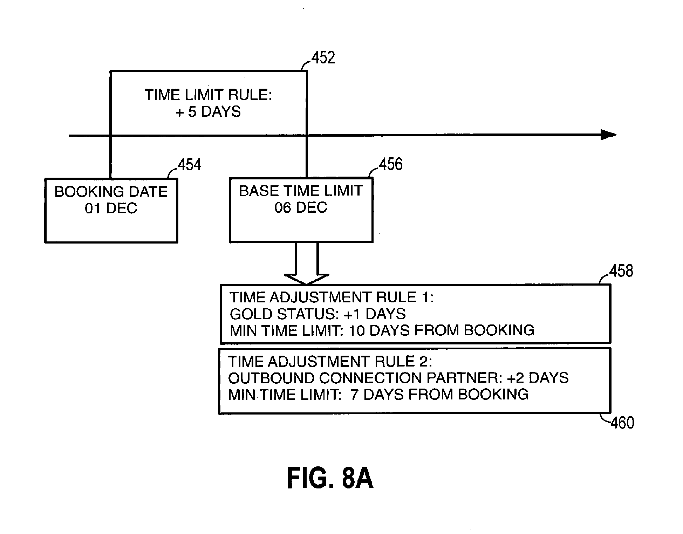

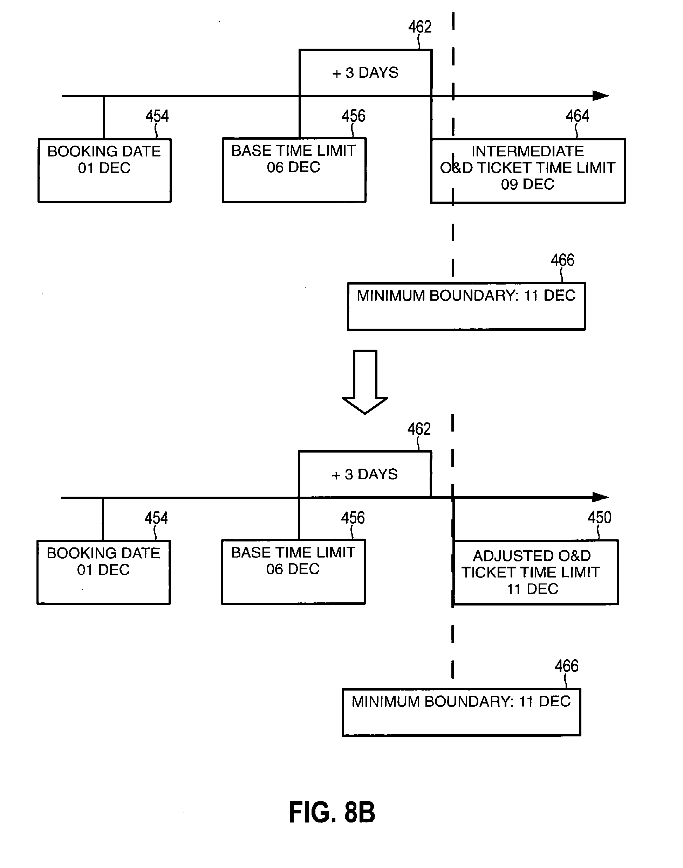

FIGS. 8A-B provide diagrammatic illustrations of an example determination of an origin and destination pair ticket time limit 450 consistent with some embodiments of the invention including a minimum boundary. In this example, a time limit rule 452 may indicate that, from a booking date 454 of December 1 ('01 DEC') for a particular origin and destination pair, a base time limit may be five days ('+5 DAYS') from the booking date 454 - i.e., the base time limit 456 is December 6 ('06 DEC'). As shown, the base time limit 456 may be adjusted based on two time adjustment rules 458, 460. In this example, a first time adjustment rule 458 ('TIME ADJUSTMENT RULE 1') indicates that the base time limit 456 should be adjusted by the addition of one day if a customer/passenger has a customer loyalty gold status ('GOLD STATUS: +1 DAY'). A second time adjustment rule 460 indicates that the base time limit 456 should be adjusted by the addition of 2 days if an outbound connection for a travel segment of the origin and destination pair is provided by a partner ('OUTBOUND CONNECTION PARTNER: +2 DAYS'). Therefore, in this example, the base time limit 456 is adjusted by the addition of three days 462 to thereby determine the intermediate ticket time limit 464 of December 9 ('09 DEC') for the origin and destination pair, which is the overall result of applying the two time adjustment rules 458, 460.

In addition, in this example, each time adjustment rule 458, 460 includes a minimum time limit - the first time adjustment rule 458 indicates a minimum time limit of 10 days from the booking date 454 ('MIN TIME LIMIT: 10 DAYS FROM BOOKING'), and the second time adjustment rule 460 indicates a minimum time limit of 7 days from the booking date 454 ('MIN TIME LIMIT: 7 DAYS FROM BOOKING'). Therefore, in this example, the inventory system 106 may determine a minimum boundary 466 associated with determining the origin and destination pair ticket time limit 450. In particular, the inventory system 106 determines the highest minimum time limit of the time adjustment rules 458, 460, which in this example is 10 days from the booking date 454 provided in the first time adjustment rule 458. The minimum boundary 454 is determined to be December 11 ('11 DEC'), which is the result of adding 10 days to the booking date 454. In this particular example, the intermediate origin and destination pair ticket time limit 464 is earlier than the minimum boundary 466, so adjustment of the origin and destination pair ticket time limit 464 is needed. As shown, the intermediate ticket time limit 464 is further adjusted based on the minimum boundary 466 to thereby determine the adjusted ticket time limit 450 for the origin and destination pair, where the adjustment shifts the ticket time limit by adding two days, such that the adjusted ticket time limit 450 for the origin and destination pair falls on December 11 ('11 DEC'), which is the earliest possible date based on the minimum boundary 466.

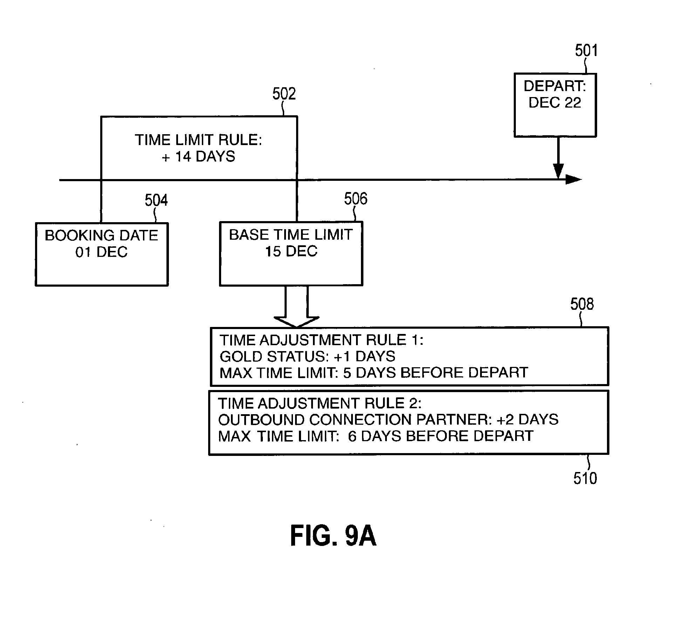

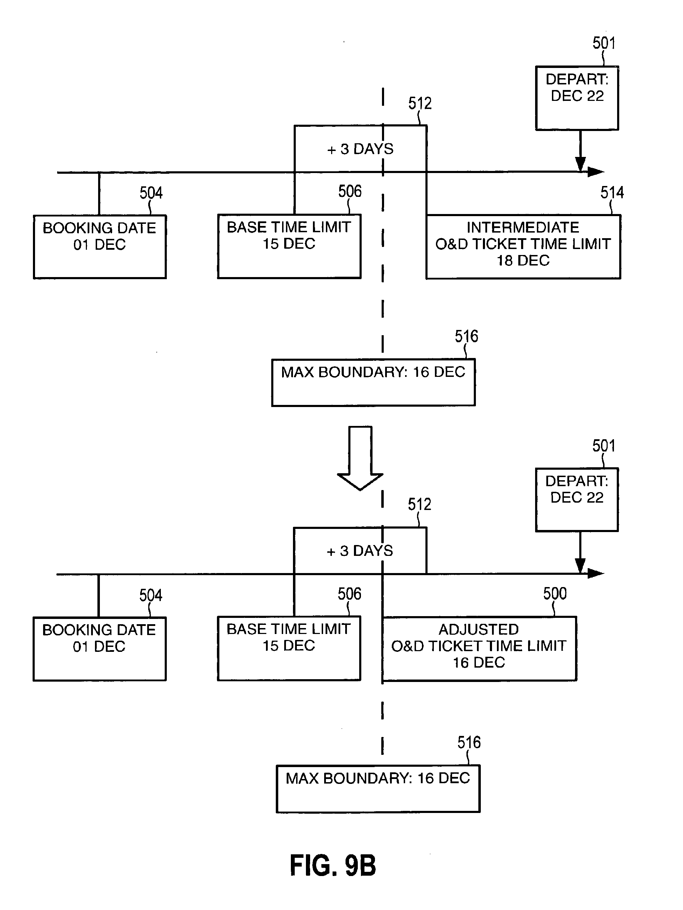

FIGS. 9A-B provide diagrammatic illustrations of an example determination of an origin and destination pair ticket time limit 500 consistent with some embodiments of the invention including a maximum boundary and a departure date 501 of December 22 ('DEPART: DEC 22'). In this example, a time limit rule 502 may indicate that, from a booking date 504 of December 1 ('01 DEC') for a particular origin and destination pair, a base time limit may be fourteen days ('+14 DAYS') from the booking date 504 - i.e., the base time limit 506 is December 15 ('15 DEC'). As shown, the base time limit 506 may be adjusted based on two time adjustment rules 508, 510. In this example, a first time adjustment rule 508 ('TIME ADJUSTMENT RULE 1') indicates that the base time limit 506 should be adjusted by the addition of one day if a customer/passenger has a customer loyalty gold status ('GOLD STATUS: +1 DAY'). A second time adjustment rule 510 indicates that the base time limit 506 should be adjusted by the addition of 2 days if an outbound connection for a travel segment of the origin and destination pair is provided by a partner ('OUTBOUND CONNECTION PARTNER: +2 DAYS'). Therefore, in this example, the base time limit 506 is adjusted by the addition of three days 512 to thereby determine the intermediate ticket time limit 514 of December 18 ('18 DEC') for the origin and destination pair, which is the overall result of applying the two time adjustment rules 508, 510.

In addition, in this example, each time adjustment rule 508, 510 includes a maximum time limit - the first time adjustment rule 508 indicates a maximum time limit of five days ('MAX TIME LIMIT: 5 DAYS BEFORE DEPART') before the departure date 501 (i.e., December 17), and the second time adjustment rule 510 indicates a maximum time limit of six days ('MAX TIME LIMIT: 6 DAYS BEFORE DEPART') before the departure date 501 (i.e., December 16). Therefore, in this example, the inventory system 106 may determine a maximum boundary 516 associated with determining the origin and destination pair ticket time limit 500. In particular, the inventory system 106 determines the earliest maximum time limit of the time adjustment rules 508, 510, which in this example is December 16 (i.e., six days before the departure date of December 22) provided by the second time adjustment rule 510. In this particular example, the intermediate origin and destination pair ticket time limit 514 is later than the maximum boundary 516, so adjustment of the intermediate origin and destination pair ticket time limit514 is needed. As shown, the intermediate ticket time limit 514 is further adjusted based on the maximum boundary 516 to thereby determine the adjusted ticket time limit 500 for the origin and destination pair, where the adjustment shifts the ticket time limit by subtracting two days, such that the adjusted ticket time limit 500 for the origin and destination pair falls on December 16 ('16 DEC'), which is the latest possible date based on the maximum boundary 516.

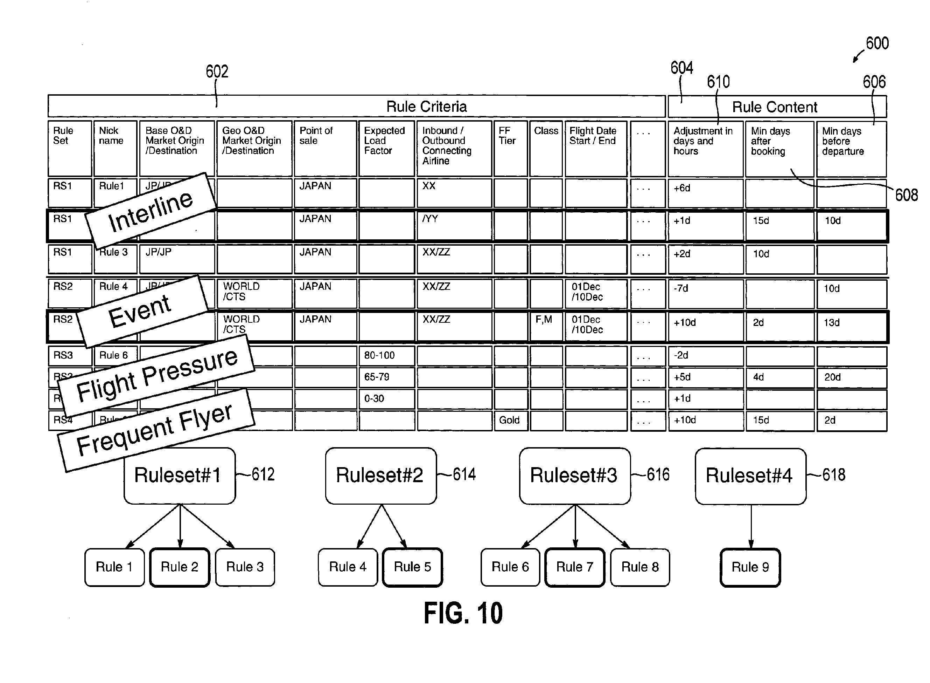

FIG. 10 provides a diagrammatic illustration of example time adjustment rules 600. In this example, each time adjustment rule includes rule criteria 602 and rule content 604. As discussed hereinabove, rule criteria 602 may be analyzed to determine whether a time adjustment rule is applicable/relevant to a travel record. Rule content 604 may be analyzed to determine a maximum time limit 606 for a time adjustment rule, a minimum time limit 608 for a time adjustment rule, and/or a time adjustment value 610. In this example, the example time adjustment rules are grouped into rule sets 612, 614, 616, 618. A first rule set 612 ('Rule set #1') corresponds to time adjustment rules of a type associated with a travel segment context of interline; a second rule set 614 corresponds to time adjustment rules of a type associated with events; a third rule set 616 corresponds to time adjustment rules of a type associated with flight pressure (which may be based on load factor and/or expected load factor); and a fourth rule set 618 corresponds to time adjustment rules of a type associated with customer loyalty/frequent flyer statuses. As illustrated in the example, rule criteria for the time adjustment rules may comprise origin and destination, point of sale, expected load factor, connecting flights, frequent flyer tier, travel segment class, specific date ranges, and/or other such characteristics of travel segments of a travel record.

Therefore, consistent with embodiments of the invention, an inventory system may determine a travel record ticket time limit. The travel record ticket time limit may be based at least in part on one or more origin and destination pair ticket time limits determined for the travel record, where the origin and destination pair ticket time limits may be determined base at least in part on travel segments corresponding to the origin and destination pair. Furthermore, consistent with embodiments of the invention, a base time limit may be determined for each origin and destination pair of the travel record, and the base time limit for each origin and destination pair may be adjusted based at least in part on one or more time adjustment rules. In some embodiments, the time adjustment rules may be grouped into one or more rule sets, and a time adjustment rule having a highest priority may be selected from each rule set for adjustment of the base time limit. Furthermore, minimum and/or maximum boundaries may be determined for each origin and destination pair, such that an origin and destination ticket time limit may be further adjusted based at least in part on the minimum and/or maximum boundary. Consistent with embodiments of the invention, the ticket time limit determination may be performed at the inventory system level, such that advanced data accessible by the inventory system may be retrieved and/or utilized in determining applicable time adjustment rules.

Furthermore, as described herein, embodiments of the invention may improve travel service reservation and travel inventory management technology areas by improving travel inventory item management. Generally, travel reservation systems and travel inventory systems (e.g., global distribution systems) may implement embodiments of the invention, where embodiments of the invention may improve efficiency in travel inventory item management by inventory systems. As will be appreciated, ticket time limits generated consistent with embodiments of the invention may facilitate dynamic management of travel inventory item booking and ticketing. In addition, embodiments of the invention may facilitate improved customization of travel inventory item management by inventory systems. Moreover, implementation of embodiments of the invention may address shortcomings of travel inventory systems by improving inventory management, increasing revenues, and reducing inventory inaccuracies and/or lost sales opportunities. Furthermore, embodiments of the invention may improve processing times for determining time limits for travel records as well as reduce processing resource requirements by implementing a two tiered determination comprising a base time limit determination and an adjustment thereof based on one or more time adjustment rules.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method for determining a ticket time limit for a travel record that includes at least one travel segment, the method comprising:
receiving, at an inventory system, a ticket time limit request for the travel record;
in the inventory system, determining, with at least one processor of the inventory system, a base time limit for an origin and destination pair associated with the travel record based at least in part on the origin and destination pair and the at least one travel segment by querying a time limit rules database based at least in part on the origin and destination pair;
adjusting, with the at least one processor, the base time limit based at least in part on the origin and destination pair and at least one time adjustment rule to determine an origin and destination pair ticket time limit; and
determining the ticket time limit for the travel record based at least in part on the origin and destination pair ticket time limit to thereby transform the origin and destination pair and the at least one travel segment of the ticket time limit request into the ticket time limit based at least in part on the base time limit and the at least one time adjustment rule.

2. The method of claim 1, wherein the at least one time adjustment rule comprises travel segment context data, passenger loyalty data, revenue data, real time inventory data, load factor data or any combination thereof.

3. The method of claim 1 or claim 2, wherein determining the base time limit for the origin and destination pair associated with the travel record comprises:
determining a dominant travel segment for the origin and destination pair; and
determining at least one attribute for the dominant travel segment,
wherein the time limit rules database is queried based at least in part on the at least one attribute for the dominant travel segment to determine the base time limit.

4. The method of any of claims 1 to 3, further comprising:
in the inventory system, determining, with the at least one processor, the at least one time adjustment rule from a rule set of possible time adjustment rules corresponding to the travel record by querying a time adjustment rules database based at least in part on the origin and destination pair.

5. The method of any of claims 1 to 3, further comprising:
in the inventory system, determining a plurality of possible time adjustment rules for the travel record by querying a time adjustment rules database based at least in part on the origin and destination pair;
grouping the plurality of possible time adjustment rules into a plurality of rule sets; and
selecting one possible time adjustment rule from at least one of the plurality of rule sets based at least in part on a priority associated with the possible time adjustment rules,
wherein the at least one time adjustment rule comprises each selected possible time adjustment rule.

6. The method of claim 5, wherein each rule set corresponds to a type from among the following types: a specific event context, a customer loyalty context, a load factor context, a point of sale context, a connection context, and a travel segment context.

7. The method of any of claims 1 to 6, wherein the at least one time adjustment rule comprises a minimum time limit, and further comprising:
determining a minimum boundary for the origin and destination pair based at least in part on the minimum time limit,
wherein the origin and destination pair ticket time limit is determined based at least in part on the minimum boundary.

8. The method of any of claims 1 to 7, wherein the at least one time adjustment rule comprises a maximum time limit, and further comprising:
determining a maximum boundary for the origin and destination pair based at least in part on the maximum time limit,
wherein the origin and destination pair ticket time limit is determined based at least in part on the maximum boundary.

9. The method of any of claims 1 to 8, wherein the at least one time adjustment rule comprises a minimum time limit, a maximum time limit, a rule criteria, and a time adjustment value.

10. The method of claim 9, wherein the rule criteria comprise a frequent flyer tier level, a load factor range, a travel event related date range, a travel segment context, or any combination thereof.

11. The method of any of claims 1 to 10, further comprising:
communicating a ticket time limit response that includes the ticket time limit for the travel record to a reservation system associated with the ticket time limit request.

12. A system comprising:
at least one processor;
a memory coupled with the at least one processor, the memory comprising:
a time limit rules database that stores one or more possible time limit rules for each of a plurality of possible origin and destination pairs; and
program code stored thereon and configured to be executed by the at least one processor to cause the at least one processor to:
receive a ticket time limit request for the travel record;
determine a base time limit for an origin and destination pair associated with the travel record based at least in part on the origin and destination pair and the at least one travel segment by querying the time limit rules database based at least in part on the origin and destination pair;
adjusting the base time limit based at least in part on the origin and destination pair and at least one time adjustment rule to determine an origin and destination pair ticket time limit; and
determine the ticket time limit for the travel record based at least in part on the origin and destination pair ticket time limit to thereby transform the origin and destination pair and the at least one travel segment of the ticket time limit request into the ticket time limit based at least in part on the base time limit and the at least one time adjustment rule.

13. The system of claim 12, wherein the program code is further configured to cause the at least one processor to perform the method of any of claims 2 to 11.

14. A computer program product comprising:
a computer readable storage medium; and
program code stored on the computer readable storage medium and configured, upon execution, to cause at least one processor to:
receive a ticket time limit request for the travel record;
determine a base time limit for an origin and destination pair associated with the travel record based at least in part on the origin and destination pair and the at least one travel segment by querying a time limit rules database based at least in part on the origin and destination pair;
adjust the base time limit based at least in part on the origin and destination pair and at least one time adjustment rule to determine an origin and destination pair ticket time limit; and
determine the ticket time limit for the travel record based at least in part on the origin and destination pair ticket time limit to thereby transform the origin and destination pair and the at least one travel segment of the ticket time limit request into the ticket time limit based at least in part on the base time limit and the at least one time adjustment rule.

15. The computer program product of claim 14 wherein the program code is further configured to cause the at least one processor to perform the method of any of claims 2 to 11.
